(19) Europäisches Patentamt
European Patent Office
Office européen des brevets

(11) **EP 1 016 492 A2**

(12) **EUROPÄISCHE PATENTANMELDUNG**

(43) Veröffentlichungstag:
05.07.2000 Patentblatt 2000/27

(51) Int. Cl.⁷: **B23K 26/14**

(21) Anmeldenummer: **99125245.3**

(22) Anmeldetag: **17.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1998 DE 19858679**

(71) Anmelder:
**Linde Technische Gase GmbH
82049 Höllriegelskreuth (DE)**

(72) Erfinder: **Herrmann, Johann
85716 Unterschleissheim (DE)**

(74) Vertreter: **Obermüller, Bernhard
Linde Aktiengesellschaft
Zentrale Patentabteilung
82049 Höllriegelskreuth (DE)**

(54) **Bearbeiten von Werkstücken unter Prozess- und Schutzgas**

(57)   Die Erfindung betrifft ein Verfahren und eine Vorrichtung zum Bearbeiten eines Werkstückes (3) unter Zufuhr von Prozeßgas- (14) und Schutzgas (6), wobei ein Prozeßgasstrom (14) durch eine Prozeßgasdüse (13) insbesondere auf die Bearbeitungsstelle am Werkstück geführt wird und ein Schutzgasstrom (6) zur Abschirmung gegenüber der umgebenden Atmosphäre über eine Schutzgasdüse (4) gegen die Werkstückoberfläche geleitet wird. Erfindungsgemäß strömen der Prozeßgasstrom (14) und der Schutzgasstrom (6) im wesentlichen parallel zueinander unter einem Winkel ($\gamma$) mit einem Wert zwischen 20 und 70° gegen die Werkstückoberfläche. Als Bearbeitungsverfahren kommt insbesondere eine Lasermaterialbearbeitung und dabei vor allem das Laserschweißen in Betracht. Die Prozeßgasdüse (13) und die Schutzgasdüse (4) sind zum fokussierten Laserstrahl (1) nicht koaxial angeordnet. Bevorzugt umhüllt der Schutzgasstrom (6) den Prozeßgasstrom (14).

Fig. 1

**Beschreibung**

Die Erfindung betrifft ein Verfahren zum Bearbeiten eines Werkstückes unter Zufuhr von Prozeßgas und Schutzgas, wobei ein Prozeßgasstrom insbesondere auf die Bearbeitungsstelle am Werkstück geführt und ein Schutzgasstrom zur Abschirmung gegenüber der umgebenden Atmosphäre gegen die Werkstückoberfläche geleitet wird. Die Erfindung betrifft darüber hinaus eine Vorrichtung zum Bearbeiten eines Werkstückes unter Zufuhr von Prozeßgas und Schutzgas umfassend eine Prozeßgasdüse zur Erzeugung des Prozeßgasstromes und eine Schutzgasdüse zur Erzeugung des Schutzgasstromes zur Abschirmung gegenüber der umgebenden Atmosphäre.

Prozeßgase werden zusammen mit Schutzgasen insbesondere bei Bearbeitungsverfahren eingesetzt, wo ein Prozeßgas an der oder zumindest in der Umgebung der Bearbeitungsstelle rein, d.h. ohne störende Bestandteile der umgebenden Atmosphäre benötigt wird. Die Aufgaben der Prozeßgase können dabei sehr unterschiedlich sein.

Ein wichtiges Beispiel für ein solches Bearbeitungsverfahren stellt die Lasermaterialbearbeitung und dabei insbesondere das Laserschweißen dar.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Als Laserbearbeitungsverfahren sind vor allem das Laserstrahlschneiden, das Laserstrahlschweißen und Verfahren der Laserstrahloberflächenbehandlung bekannt. Bei den Verfahren der Laserstrahloberflächenbehandlung umfassen vor allem das Laserstrahlhärten, das Laserstrahlumschmelzen, das Laserstrahllegieren, das Laserstrahlbeschichten und das Laserstrahlbohren. Die Verfahren der Laserstrahloberflächenbehandlung finden in der Regel dort Verwendung, wo konventionelle Oberflächenverfahren nicht oder nur mit großen Nachteilen eingesetzt werden können.

Bei den aufgezählten Verfahren wird durch die hohe Energie des Laserstrahls Material des zu bearbeitenden Werkstücks erhitzt, aufgeschmolzen oder verdampft. Bei der Lasermaterialbearbeitung, insbesondere beim Laserschweißen, kommen häufig mehrere Arbeitsgase (Schutz- und Prozeßgase) zum Einsatz. Je nach Verfahren und zu bearbeitendem Material können die eingesetzten Gase unterschiedliche Aufgaben zu erfüllen haben. So kann beispielsweise bei Abdeckung durch Schutzgas eine Schweißnaht, eine Härtespur, eine Spur um geschmolzenes Material, eine Beschriftung, eine Gravur oder dergleichen erzeugt werden. Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden dazu technische Gase eingesetzt, um diese Materialbearbeitungsprozesse effektiver, schneller und/oder mit verbesserter Qualität durchführen zu können.

Die Gasatmosphäre in der Bearbeitungszone besteht bei den erwähnten Laserbearbeitungsprozessen vielfach aus einem Gemisch aus dem oder den eingesetzten Arbeitsgasen und der umgebenden Luft. Als Grund hierfür sind vor allem unzureichende Gaszuführungen zu nennen, die zu Verwirbelungen zwischen Arbeitsgasströmungen und Umgebungsluft führen. Konkret bedeutet das beispielsweise für einzelne Laserbearbeitungsverfahren:

- Laserschweißnähte beispielsweise bei Edelstahlschweißungen werden oxidiert und müssen anschließend nachgearbeitet werden,
- Schweißnähte enthalten Poren oder es treten andere qualitätsmindernde Merkmale auf,
- Härtespuren sind oxidiert und müssen anschließend nachgearbeitet werden.

Vielfach sind die Gasdüsen sehr klein ausgebildet, so daß insbesondere bei schnelleren Schweißprozessen das bearbeitete Material bereits aus dem Schutzgasstrom gelangt, ohne daß vorher eine ausreichende Abkühlung des Materials stattgefunden hat, und an der Luftatmosphäre Nachoxidationen der Oberflächen auftreten können.

Am Beispiel des Laserschweißens lassen sich die Anforderungen an die unterschiedlichen Arbeitsgase gut verdeutlichen. Die Ausführungen zum Laserschweißen lassen sich ohne weiteres vom Fachmann entsprechend auf andere Bearbeitungsverfahren und Laserbearbeitungsverfahren übertragen.

Beim Laserschweißen sind mit Hilfe von technischen Gasen vor allem zwei Aufgaben zu bewältigen. Einerseits muß ein Gas die Schweißnaht abdecken und so vor schädlichen Einflüssen durch die umgebende Atmosphäre schützen. Dies wird mit Hilfe eines Schutzgases bewerkstelligt. Günstig sind hier geringe Strömungsgeschwindigkeiten und schwere Gase, die üblicherweise koaxial zum Laserstrahl zugeführt werden. Mittels eines Gases muß bei hohen Laserleistungen aber auch verhindert werden, daß die Plasmabildung (abhängig von Laserleistung, Laserart, Energiedichte, vom verdampften Materialvolumen, von der Schweißgeschwindigkeit und auch von der Schutzgasart) zu groß wird. Ansonsten wird die Laserstrahlung durch das entstandene Plasma absorbiert, abgelenkt und/oder gestört, was zur Folge hat, daß der Schweißprozeß instabil wird oder sogar zusammenbricht. Vorteilhaft sind zur Lösung dieses Problems Gase wie Helium mit hoher Wärmeleitfähigkeit und hoher Ionisationstemperatur und deren Zuführung von der Seite. Dadurch wird das Plasma weggeblasen oder durch das Gas gekühlt und verkleinert, so daß der Laserstrahl die Werkstückoberfläche ohne Probleme erreichen kann. Die Zuführung dieses Prozeßgases erfolgt hierbei unter einem Winkel von beispielsweise ca. 30° zur Oberfläche des Werkstücks mittels einfacher Röhrchen bei Durchmessern zwischen 2 und 10 mm.

Dies ist beispielsweise in der Veröffentlichung "Laser im Nebel", Dr. W. Danzer und Klaus Behler, Zeitschrift LASER, Ausgabe 1/87, Seiten 32 bis 36, beschrieben.

Insgesamt ergibt sich die Situation, daß ein Schutzgasstrom senkrecht zur Werkstückoberfläche und ein Prozeßgasstrom unter einem Winkel von beispielsweise ca. 30° zur Werkstückoberfläche gleichzeitig zugeführt werden sollen. Die Kreuzung der beiden Gasstrahlen aus Prozeß- und Schutzgas läßt sich jedoch in der Praxis nicht oder zumindest nicht zufriedenstellend bewerkstelligen. Als Lösung hat man sich damit beholfen, daß heute in der Regel nur mit einer seitlichen Gaszufuhr über das Düsenröhrchen gearbeitet wird. Durch die hohen Strömungsgeschwindigkeiten werden nämlich Schutzgaszuführungen senkrecht zur Werkstückoberfläche bzw. koaxial zum Laserstrahl gestört und verwirbelt.

Der vorliegenden Erfindung liegt daher die Aufgabe zugrunde, ein Verfahren und eine Vorrichtung der eingangs genannten Art aufzuzeigen, bei welchen der Laserbearbeitungsprozeß durch eine modifizierte Gaszufuhr verbessert wird und eine zufriedenstellende Zufuhr von sowohl Prozeßgas als auch von Schutzgas gewährleistet werden kann. Insbesondere sollen Qualitätseinbußen bei der Bearbeitung aufgrund der Atmosphäre vermieden werden.

Diese Aufgabe wird erfindungsgemäß im Hinblick auf das Verfahren dadurch gelöst, daß die Prozeßgasdüse und die Schutzgasdüse so angeordnet sind, daß der Prozeßgasstrom und der Schutzgasstrom im wesentlichen parallel zueinander und unter einem Winkel mit einem Wert zwischen 20 und 70° gegen die Werkstückoberfläche strömen.

Die Aufgabe wird erfindungsgemäß für die Vorrichtung dadurch gelöst, daß eine Prozeßgasdüse zur Erzeugung des Prozeßgasstromes und eine Schutzgasdüse zur Erzeugung des Schutzgasstromes so angeordnet werden, daß der Prozeßgasstrom und der Schutzgasstrom im wesentlichen parallel zueinander und unter einem Winkel mit einem Wert zwischen 20 und 70° gegen die Werkstückoberfläche strömen.

Im Rahmen der Erfindung wird unter Prozeßgas ein zweites Arbeitsgas, gegebenenfalls auch ein zweites Schutzgas, verstanden.

Durch die im wesentlichen gleiche Strömungsrichtung von Prozeßgas und Schutzgas werden starke Verwirbelungen vermieden, die zu schädlichen Einflüssen durch die Atmosphäre bei der Bearbeitung des Werkstückes führen. Dabei ergeben sich praktisch keine qualitätsmindernde Effekte, wenn das Prozeßgas möglicherweise Schutzgas miteinwirbelt.

Die Erfindung eignet sich insbesondere zum Einsatz beim Lasermaterialbearbeiten. Als Laserbearbeitungsverfahren kommen vor allem das Laserschweißen, aber auch beispielsweise das Beschriften, Abtragen, Gravieren und Umschmelzen unter Einsatz von Lasern in Betracht.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Als Schutzgase eignen sich insbesondere für das Laserschweißen vor allem inerte Gase wie Argon, Neon und Helium, aber auch beispielsweise Stickstoff, Sauerstoff, Kohlendioxid, Wasserstoff, Kohlenwasserstoffe und die Gemische der vorgenannten Gase. Als Prozeßgas kommt vor allem Helium und Gemisch aus Helium und anderen Gasen wie Wasserstoff, Sauerstoff, Kohlendioxid und Stickstoff in Betracht. Bei der Kombination von Helium als Prozeßgas und Argon als Schutzgas ist auch die Führung des leichten Helium in dem schweren und stabilen Schutzgasstrom aus Argon sehr vorteilhaft.

Mit Vorteil wird der Prozeßgasstrom über eine zum Laserstrahl nicht koaxial angeordnete Prozeßgasdüse gegen die Werkstückoberfläche geführt und der Schutzgasstrom über eine zum Laserstrahl nicht koaxial angeordnete Schutzgasdüse geleitet.

Bevorzugt wird der Prozeßgasstrom durch den Schutzgasstrom komplett eingehüllt. Damit kann ein Einfluß der Luftumgebung auf den Bearbeitungsprozeß besonders wirksam unterbunden werden. Die Zufuhr des Prozeßgases wird dabei vom Schutzgas in der Regel umflossen. In manchen Fällen ist es aber auch denkbar, daß Prozeß- und Schutzgas über Düsen zugeführt werden, welche dicht beisammen angeordnet sind, so daß kein Spalt zwischen den beiden Düsen besteht. Der Auslaß des Prozeßgases liegt dann am Schutzgasstrom. Das Prozeßgas kann folglich aus der Prozeßgasdüse im oder am Schutzgasstrom austreten.

Besondere Vorteile können auch erzielt werden, wenn der Schutzgasstrom den Prozeßgasstrom innerhalb des Schutzgasstromes nicht symmetrisch umschließt, d.h. der Schutzgasstrom den vom Schutzgasstrom umgebenen Prozeßgasstrom nicht symmetrisch umhüllt. Auf diese Weise kann beispielsweise verhindert werden, daß insbesondere bei schnelleren Bearbeitungsprozessen das bearbeitete Material des Werkstücks bereits aus dem Schutzgasstrom gelangt, ohne das vorher eine ausreichende Abkühlung des Materials auf eine Temperatur unterhalb der Reaktionstemperaturen stattgefunden hat, und deshalb an der Luftatmosphäre Nachoxidationen der Oberfläche auftreten können.

Bei der Materialbearbeitung im Rahmen der Erfindung sollte die Bearbeitungsstelle bzw. der Bearbeitungsprozeß durch die Schutzgasströmung großflächig abgedeckt werden. Auf diese Weise können qualitätsschädigende Einflüsse der Atmosphäre gänzlich vermieden oder zumindest wirksam verringert werden. Die Düsen für Prozeß- und Schutzgas können grundsätzlich in jeder beliebigen Richtung zur Relativbewegungsrichtung zwischen Werkzeug bzw. Laserstrahl und Werkstück ausgerichtet sein. Sie können insbesondere vorlaufend, quer zur Relativbewegungsrichtung zwischen Werkzeug bzw. Laserstrahl und Werkstück oder aber bevorzugt nachlaufend eingesetzt werden.

Bei der Erfindung wird ein Erzeugen eines im wesentlichen homogenen Strömungsfeldes des Schutzgasstromes angestrebt. Die Schutzgasströmung sollte ein möglichst laminares Strömungsprofil aufweisen. Die erfindungsgemäß angestrebte homogene, im wesentlichen parallele Gasströmung des Schutzgases gewährleistet, daß innerhalb eines relativ großen Raumes die Reinheit der eingesetzten Gase erhalten bleibt. Die Gase können daher ihre optimale Wirkung für im Bearbeitungsprozeß entfalten. Die Ergebnisse sind konstant und nicht von wechselnden Anteilen an eingewirbelter Umgebungsluft abhängig. Durch die großräumige Gasabdeckung können auch schädliche Reaktionen des noch heißen Materials mit der Atmosphäre wie beispielsweise ein Nachoxidieren wirksam verhindert werden.

Die Schutzgasdüse kann Einbauten umfassen. Mit diesen Einbauten können insbesondere Mittel zur Homogenisierung des Gasstromes vorgesehen sein. Die Düse enthält dazu in der Regel ein Homogenisatormaterial. Bei dem Homogenisatormaterial handelt es sich um flächiges, gasdurchlässiges Material, welches dem Gasfluß auf der ganzen Fläche einen möglichst gleichen Strömungswiderstand entgegenstellt oder am Rand einer höheren und im Zentrum der Strömung einen niedrigeren Strömungswiderstand darstellt. Es kann sich dabei um Lagen von Geweben, Sintermaterial, Stahlwolle, Lochbleche und dergleichen handeln. Auch Materialien wie Holz mit Kanälen in vertikaler Richtung sind denkbar. Dieses Homogenisatormaterial muß gewährleisten, daß zumindest am Rand der Düse eine möglichst homogene Gasströmung auftritt. Dadurch können Verwirbelungen und Vermischungen mit der umgebenden Atmosphäre vermieden werden.

Es können auch Einbauten am Düsenaustritt der Schutzgasdüse vorgesehen sein, so daß der Gasstrom über mehrere Öffnungen aus der Schutzgasdüse ausströmt. Der Düsenaustritt kann beispielsweise mit einem Sieb oder Gitter, einem Lochblech, einem Bohrungsfeld oder dergleichen als Einbauten ausgestattet sein. Damit kann die Strömung senkrecht zur Austrittsfläche optimiert werden.

Die Schutzgasdüse könnte aufgrund des erzeugten Gasstromes als Schutzgasdusche bezeichnet werden, da das Schutzgas ähnlich wie bei einer Wasserdusche zugeführt wird.

Die Erfindung ermöglicht auch eine Bearbeitung mit einem vergrößerten Arbeitsabstand zwischen Düsen und Laserbearbeitungsstelle bzw. Werkstückoberfläche. Dies kann notwendig werden, wenn die Zugänglichkeit am Werkstück eingeschränkt ist. Es konnten Abstände zwischen Bearbeitungspunkt der Bearbeitung und dem Düsenaustritt der Schutzgasdüse von bis zu 30 mm realisiert werden.

Die Außenkontur der Düsenaustrittsfläche der Schutzgasdüse kann grundsätzlich beliebig gestaltet sein. Runde Austrittsflächen (z.B. kreisförmig) bedeuten in der Regel eine einfachere Fertigung. Rechteckige Austrittsflächen führen in der Regel zu einer besseren Abdeckung. Die Düsenaustrittsflächen der Schutzgasdüse können plan, aber auch räumlich gekrümmt sein (z.B. sphärisch). Gekrümmte Austrittsflächen erlauben es, bezüglich des Gasaustritts an der Düse näher an den Bearbeitungspunkt bzw. Arbeitspunkt des Lasers, sowie an die bearbeitete Spur zu gelangen.

In Ausgestaltung der Erfindung weist der Schutzgasstrom eine Geschwindigkeit unter 10 m/s auf. Als Mindestzahl für die Geschwindigkeit wird vorteilhafterweise ein Wert von 0,01 m/s oder bevorzugt ein Wert von 0,1 m/s eingehalten. Der Schutzgasstrom kann eine Geschwindigkeit zwischen 0,01 m/s und 5 m/s, vorzugsweise eine Geschwindigkeit zwischen 0,1 m/s und 1 m/s, aufweisen. Ein Unterschied zwischen Maximalwert und Mittelwert der Geschwindigkeit im Strömungsfeld des Schutzgases fällt insbesondere dann minimal aus, wenn das Homogenisatormaterial auf der ganzen durchströmten Fläche zu einem möglichst gleichen Strömungswiderstand führt.

Mit Vorteil strömt das Schutzgas über mehrere Öffnungen aus der Schutzgasdüse aus. Diese Maßnahme fördert eine wirksame Abdeckung durch das Schutzgas.

In Ausgestaltung der Erfindung wird der Schutzgasstrom über eine zum Laserstrahl nicht koaxial angeordnete Schutzgasdüse gegen die Werkstückoberfläche geführt, wobei die vom Gasstrom durchströmte Fläche am Düsenaustritt zumindest fünfhundert mal größer ist als die vom Laserstrahl bestrahlte Fläche auf der Werkstückoberfläche. Als Mindestzahl für das Flächenverhältnis wird vorteilhafterweise ein Wert von 1.000 oder bevorzugt ein Wert von 10.000 eingehalten. In Ausgestaltung der Erfindung weist die vom Gasstrom durchströmte Fläche zu der vom Laserstrahl bestrahlten Fläche auf der Werkstückoberfläche ein Verhältnis von 1.000 zu 1 bis 5.000.000 zu 1, vorzugsweise ein Verhältnis von 10.000 zu 1 bis 500.000 zu 1, auf.

In einer alternativen oder ergänzenden Ausgestaltung der Erfindung wird der Schutzgasstrom über eine Schutzgasdüse gegen die Werkstückoberfläche geführt, wobei die vom Gasstrom durchströmte Fläche am Düsenaustritt zumindest 50 mm$^2$ beträgt. Die durchströmte Fläche am Düsenaustritt wird dabei außerhalb der Schutzgasdüse quer zur Strömungsrichtung des Gasstromes gemessen. Bevorzugt beträgt die vom Schutzgasstrom durchströmte Fläche am Düsenaustritt mindestens 100 oder besonders bevorzugt mindestens 500 mm$^2$. Besonders gute Ergebnisse bei der (Laser)-Materialbearbeitung können dadurch erzielt werden, daß die vom Gasstrom durchströmte Fläche am Düsenaustritt zwischen 100 und 50.000 mm$^2$, vorzugsweise zwischen 500 und 10.000 mm$^2$ beträgt.

In Weiterbildung der Erfindung werden der Prozeß- und der Schutzgasstrom mit einem Winkel zwischen Werkstückoberfläche bzw. Laserstrahlachse und Strahlrichtung der Gasströme zwischen 30° und 60°, bevorzugt von 40° bis 50°, gegen die Werkstückoberfläche geleitet. Der optimale Winkel ist abhängig von der Art der Bearbeitung, der Berabeitungsrichtung und/oder von der Zugänglichkeit.

Um einen Düsenkanal mit verbesserter Richtcharakteristik für die Prozeßgasströmung zu erhalten, können Ausgestaltungen des im wesentlichen zylinderförmig ausgebildeten Düsenkanals vorgesehen sein. Es kann eine Prozeßgasdüse eingesetzt werden, deren Düsenkanal einen Bereich mit einer Verengung des Düsenkanalquerschnitts in Strömungsrichtung und einen Bereich mit einer Erweiterung des Düsenkanalquerschnitts in Strömungsrichtung umfaßt. Der Düsenkanal der Prozeßgasdüse kann im vom Gas zuletzt durchströmten Kanalstück (dem Werkstück zugewandt) einen sich ändernden Querschnitt aufweisen. Dadurch können die Prozeßgasdüsen weiter entfernt vom Bearbeitungs- bzw. Schweißprozeß positioniert werden. Als Folge sinkt die Gefahr von Verschmutzung und Beschädigung der Düsen. Außerdem sind die Möglichkeiten der Strömungsgestaltung entsprechend höher. Der Düsenkanal der Prozeßgasdüse kann mit Vorteil einen lavalförmig ausgebildeten Bereich umfassen. Mit Vorteil ist bei diesen Ausgestaltungen der Düsenkanal in einem Bereich im wesentlichen zylinderförmig ausgestaltet. Dieser Bereich ist in der Regel auf der vom Werkstück abgewandten Seite der Düse angeordnet. Weitere Vorteile lassen sich dadurch erzielen, daß der im wesentlichen zylinderförmig ausgestaltete Bereich des Düsenkanals länger ist als das Kanalstück mit sich änderndem Querschnitt bzw. länger als der lavalförmig ausgebildete Bereich der Prozeßgasdüse.

Die Erfindung kann im Zusammenhang der Laserbearbeitung mit allen Arten von Lasern zur Anwendung kommen. Vor allem eignet sie sich für den Einsatz bei der Laserbearbeitung mit CO$_2$-Lasern, Nd-YAG-Lasern, Eximer-Lasern und Dioden-Lasern.

Als Werkstückmaterialeien kommen insbesondere alle Materialien in Betracht, bei denen bei höheren Temperaturen Reaktionen mit Gasen auftreten können: Dies sind beispielsweise Metalle, Glas, Holz, Kunststoffe, Silizium.

Die Erfindung ermöglicht eine effektive Prozeßgaskontrolle und gleichzeitige Abdeckung des Bearbeitungsprozesse mit reinen Gasen. In der Regel wird das Prozeßgas durch Schutzgas geführt, wodurch größere Düsenabstände vorgesehen werden können. Die Düsen werden durch die Temperaturen, Spritzer und Verschmutzung weniger beansprucht. Die beiden Gase können auf die unterschiedlichen Aufgaben hinsichtlich Art und Menge optimiert werden.

Im folgenden soll die Erfindung anhand eines Ausführungsbeispieles schematisch näher erläutert werden.

Hierbei zeigen:

Figur 1     eine Vorrichtung zur Lasermaterialbearbeitung mit Laserstrahl und nicht koaxial zum Laserstrahl angeordneter Düsen und

Figur 2     den Aufbau der in Figur 1 dargestellten nicht koaxial angeordneten Düsen.

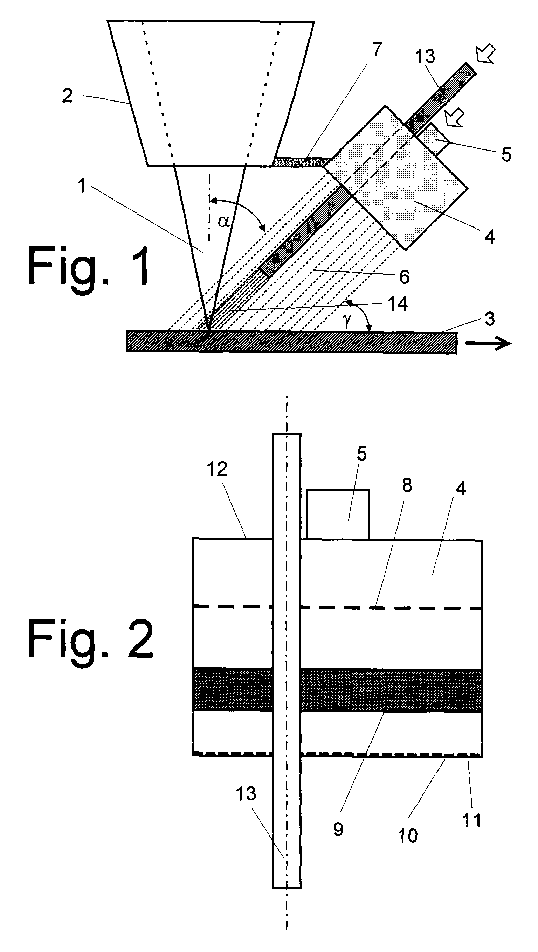

In **Figur 1** ist eine Vorrichtung zur Lasermaterialbearbeitung schematisch dargestellt. Der Laserstrahl 1 wird durch eine in der Figur andeutungsweise abgebildete Strahlführungseinrichtung 2 des Laserbearbeitungskopfes der Bearbeitungsvorrichtung fokussiert auf die Oberfläche des Werkstücks 3 geleitet.

Schutzgas wird über einen Gaseinlaß 5 in die nicht koaxial zum Laserstrahl angeordnete Schutzgasdüse 4 eingeleitet. Von der Düse 4 wird eine im wesentlichen homogene und laminare Schutzgasströmung 6 auf die Werkstückoberfläche geleitet.

Prozeßgas wird über die Prozeßgasdüse 13 in Form einer auf die Bearbeitungsstelle an der Werkstückoberfläche gerichteten Prozeßgasströmung 14 geführt.

Der Prozeßgasstrom 14 und der Schutzgasstrom 6 strömen im wesentlichen parallel zueinander und unter einem Winkel γ mit einem Wert von etwa 45° gegen die Oberfläche des Werkstücks 3. Die nicht koaxial angeordneten Düsen 4 und 13 sind dabei bezüglich der Laserstrahlung so ausgerichtet, daß die Strahlrichtung der Gasströme aus den Düsen 4 und 13 gegen die Werkstückoberfläche einen Winkel α gegenüber der Laserstrahlachse (durch strichpunktierte Linie angedeutet) aufweist. Der Winkel α kann aus dem Winkel γ berechnet werden und beträgt:

$$a = 90° - \gamma$$

Im dargestellten Fall des Ausführungsbeispieles beträgt der Winkel α folglich auch etwa 45°.

Die (mittlere) Geschwindigkeit des Schutzgasstromes 6 liegt bei etwa 0,2 m/s. Das durch die Düse 4 strömende Gasvolumen an Schutzgas beträgt beispielsweise nur etwa 20 cm$^3$ pro cm$^2$ Austrittsfläche und Sekunde.

Zwischen der Strahlführungseinrichtung 2 des Laserbearbeitungskopfes und der Schutzgasdüse 4 ist eine Abdeckung 7 vorgesehen, die ein Einsaugen und/oder Einströmen von Luft durch den Raum bzw. Spalt zwischen Laserstrahlführung und der zum Laserstrahl nicht koaxial angeordneten Schutzgasdüse 4 unterbindet.

Der Pfeil am Werkstück 3 deutet die Bewegungsrichtung des Werkstückes bei der Bearbeitung an.

**Figur 2** zeigt beispielhaft den Aufbau der in Figur 1 dargestellten Düsen 4 und 13 im Detail. Vom Gehäuse 12 der Schutzgasdüse 4 mitumfaßt wird die Prozeßgasdüse 13. Beide Düsen bilden eine bauliche Einheit.

Die Prozeßgasdüse 13 besitzt beispielsweise einen Außendurchmesser von 6 mm und einen Innendurchmesser von 4 mm.

Die Schutzgasdüse 4 enthält einen Gaseinlaß 5, ein Prallblech 8, ein Homogenisatormaterial 9 (Material zur Homogenisierung der Gasströmung) und eine Austrittsfläche versehen mit Mitteln 10 und 11, um dem Gasstrom eine Richtung zu geben.

Das Prallblech weist beispielsweise die Maße 30 mm x 40 mm und eine Stärke von 1 mm auf. Mit Hilfe von Öffnungsschlitze im Prallblech 8 kann erreicht werden, daß keine gerichtete Strömung des Schutzgases auf das Homogenisatormaterial 9 trifft. Das Prallblech 8 muß nicht zwingend in der Düse 4 vorhanden sein. Alternativ oder aber ergänzend kann auch der Gaseinlaß 5 verhindern, daß eine gerichtete Strömung des Gases auf das Homogenisatormaterial 9 trifft. Dies kann beispielsweise durch die Gestaltung des Gaseinlasses 5 gewährleistet werden (z.B. Gaseinlaß über Sintertöpfe).

Das Homogenisatormaterial 9 besteht beispielsweise aus Stahlwolle. Eine typische Stärke für das Homogenisatormaterial 9 liegt bei 3 mm. Das Homogenisatormaterial 9 weist beispielsweise die Maße 30 mm x 40 mm auf.

Am Gasaustritt der Schutzgasdüse 4 ist im Ausführungsbeispiel ein Bohrungsfeld 10 mit einer Vielzahl von Öffnungen 11 (Bohrungen) eingebaut. Das Bohrungsfeld 10 hat beispielsweise die Maße 30 mm x 40 mm und eine Stärke von 1 mm. Die Größe der Bohrungen 11 liegt beispielsweise bei einem Durchmesser von 0,6 mm.

**Patentansprüche**

1. Verfahren zum Bearbeiten eines Werkstückes (3) unter Zufuhr von Prozeßgas (14) und Schutzgas (6), wobei ein Prozeßgasstrom (14) insbesondere auf die Bearbeitungsstelle am Werkstück geführt wird und ein Schutzgasstrom (6) zur Abschirmung gegenüber der umgebende Atmosphäre gegen die Werkstückoberfläche geleitet wird, **dadurch gekennzeichnet**, daß der Prozeßgasstrom (14) und der Schutzgasstrom (6) im wesentlichen parallel zueinander und unter einem Winkel ($\gamma$) ungleich 90° und bevorzugt mit einem Wert zwischen 20° und 70° gegen die Werkstückoberfläche strömen.

2. Verfahren nach Anspruch 1, dadurch gekennzeichnet, daß eine Lasermaterialbearbeitung vorgesehen ist, wobei ein fokussierter Laserstrahl (1) auf die zu bearbeitende Werkstückoberfläche (3) geführt wird.

3. Verfahren nach Anspruch 2, dadurch gekennzeichnet, daß der Prozeßgasstrom (14) über eine zum Laserstrahl (1) nicht koaxial angeordnete Prozeßgasdüse (13) gegen die Werkstückoberfläche (3) geführt wird und der Schutzgasstrom (6) über eine zum Laserstrahl nicht koaxial angeordnete Schutzgasdüse (4) geleitet wird.

4. Verfahren nach einem der Ansprüche 1 bis 3, dadurch gekennzeichnet, daß das Prozeßgas (6) aus einer Prozeßgasdüse (13) im oder am Schutzgasstrom (6) austritt.

5. Verfahren nach Anspruch 4, dadurch gekennzeichnet, daß der Schutzgasstrom (6) den vom Schutzgasstrom umgebenen Prozeßgasstrom (14) nicht symmetrisch umhüllt.

6. Verfahren nach einem der Ansprüche 1 bis 5, dadurch gekennzeichnet, daß der Schutzgasstrom (6) eine Geschwindigkeit unter 10 m/s, bevorzugt zwischen 0,01 m/s und 5 m/s und besonders bevorzugt zwischen 0,1 m/s und 1 m/s aufweist.

7. Verfahren nach einem der Ansprüche 1 bis 6, dadurch gekennzeichnet, daß das Schutzgas (6) über mehrere Öffnungen (11) aus der Schutzgasdüse (4) ausströmt.

8. Verfahren nach einem der Ansprüche 2 bis 7, dadurch gekennzeichnet, daß die vom Schutzgasstrom (6) durchströmte Fläche zumindest fünfhundert mal größer ist als die vom Laserstrahl bestrahlte Fläche auf der Werkstückoberfläche.

9. Verfahren nach einem der Ansprüche 1 bis 8, dadurch gekennzeichnet, daß die vom Schutzgasstrom (6) durchströmte Fläche am Düsenaustritt zumindest 50 mm$^2$ beträgt.

10. Vorrichtung zum Bearbeiten eines Werkstückes (3) unter Zufuhr von Prozeßgas (14) und Schutzgas (6) umfassend eine Prozeßgasdüse (13) zur Erzeugung des Prozeßgasstromes (14) und eine Schutzgasdüse (4) zur Erzeugung des Schutzgasstromes (6) als Abschirmung gegenüber der umgebende Atmosphäre, **dadurch gekennzeichnet**, daß die Prozeßgasdüse (13) und die Schutzgasdüse (4) so angeordnet sind, daß der Prozeßgasstrom (14) und der Schutzgasstrom (6) im wesentlichen parallel zueinander und unter einem Winkel ($\gamma$) mit einem Wert zwischen 20° und 70° gegen die Werkstückoberfläche strömen.

**11.** Vorrichtung nach Anspruch 10, dadurch gekennzeichnet, daß Mittel zum Führen eines fokussierten Laserstrahls (1) auf die zu bearbeitende Werkstückoberfläche (3) zur Lasermaterialbearbeitung vorgesehen sind.

**12.** Vorrichtung nach Anspruch 11, dadurch gekennzeichnet, daß die Prozeßgasdüse (13) und die Schutzgasdüse (4) zum Laserstrahl (1) nicht koaxial angeordnet sind.

**13.** Vorrichtung nach einem der Ansprüche 10 bis 12, dadurch gekennzeichnet, daß die Prozeßgasdüse (13) und die Schutzgasdüse (4) so angeordnet sind, der Schutzgasstrom (6) den vom Schutzgasstrom umgebenen Prozeßgasstrom (14) nicht symmetrisch umhüllt.

**14.** Vorrichtung nach einem der Ansprüche 10 bis 13, dadurch gekennzeichnet, daß der Düsenkanal der Prozeßgasdüse (13) einen Bereich mit einer Verengung des Düsenkanalquerschnitts in Strömungsrichtung und einen Bereich mit einer Erweiterung des Düsenkanalquerschnitts in Strömungsrichtung umfaßt.

**15.** Vorrichtung nach einem der Ansprüche 10 bis 13, dadurch gekennzeichnet, daß der Düsenkanal der Prozeßgasdüse (13) im wesentlichen zylinderförmig ausgebildet ist oder zumindest einen im wesentlichen zylinderförmig ausgestalteten Bereich umfaßt.

**16.** Vorrichtung nach Anspruch 15, dadurch gekennzeichnet, daß der Düsenkanal der Prozeßgasdüse (13) vorzugsweise im vom Prozeßgas (5) zuletzt durchströmten Kanalstück (dem Werkstück zugewandt) einen sich ändernden Querschnitt aufweist.

**17.** Vorrichtung nach Anspruch 15 oder 16, dadurch gekennzeichnet, daß der Düsenkanal der Prozeßgasdüse (13) einen lavalförmig ausgebildeten Bereich umfaßt.

**18.** Vorrichtung nach einem der Ansprüche 10 bis 13, dadurch gekennzeichnet, daß die Schutzgasdüse (4) Einbauten (8, 9, 10) umfaßt.

**19.** Vorrichtung nach Anspruch 18, dadurch gekennzeichnet, daß die Einbauten Mittel (9) zur Homogenisierung des Schutzgasstromes (6) umfassen.

**20.** Vorrichtung nach einem der Ansprüche 10 bis 19, dadurch gekennzeichnet, daß der Düsenaustritt der Schutzgasdüse (4) mehrere Öffnungen (11) aufweist.

**21.** Vorrichtung nach einem der Ansprüche 10 bis 20, dadurch gekennzeichnet, daß die Prozeßgasdüse (13) und die Schutzgasdüse (4) eine bauliche Einheit bilden.

Fig. 1

Fig. 2